# EUROPEAN PATENT APPLICATION

(11) **EP 4 819 616 A1**
(43) Date of publication of application: **07.10.2026**
(21) Application number: 24915471.7
(22) Date of filing: 31.12.2024
(51) Int. Cl.: H04N 21/431, H04N 21/485

(54) **ELECTRONIC DEVICE AND OPERATION METHOD THEREOF**

(30) Priority: 05.01.2024 KR 20240002450
(71) Applicant: Samsung Electronics Co., Ltd., Suwon-si, Gyeonggi-do 16677 (KR)
(72) Inventor: CHOI, Byoungjin, Suwon-si Gyeonggi-do 16677 (KR)
(74) Representative: Walaski, Jan Filip
(86) International application number: PCT/KR2024/021587
(87) International publication number: WO 2025/147061

(57) **Abstract**

An electronic device is disclosed. The electronic device according to an embodiment of the present disclosure may include: a display; and a processor electrically connected to the display, wherein the processor is configured to: in response to identifying a first user input for selecting division scaling, divide an input image into a first division image, a second division image, and a third division image; divide the entire area of the display into a first display area, second display area, and a third display area; divide the input image according to a ratio of a division image to a display area by using multiple scalers with respect to all display areas so as to acquire scaling images; merge the first scaling image, the second scaling image, and the third scaling image to generate an output image; and display the output image through the display.

## Description

### [Technical Field]

Embodiments of the disclosure relate to an electronic device and a method of operating the electronic device.

### [Background Art]

Due to development in information communication technology, technology related to display devices (e.g., TVs, monitors) is also continuously being enhanced. A display device may support high resolution and provide a clearer screen, and products with larger and thinner form factors are being released. In this regard, wide monitors and wide TV products providing a display with a wide aspect ratio are also being released, and such TV products may provide aspect ratios of 21:9 and 32:9.

### [Disclosure of Invention]

### [Technical Problem]

In case that an aspect ratio of a display device (e.g., 32:9) is larger than an aspect ratio of a video to be played (e.g., 16:9), the video may be extended or a blank area may be displayed as black. In case that the video is extended, distortion may occur in the video and, in case that the blank portion is displayed as black, immersion of a user may be decreased.

Based on the discussion as described above, the disclosure provides a device and a method for providing a user with higher video immersion.

### [Solution to Problem]

An electronic device according to an embodiment of the disclosure includes a display and a processor electrically connected to the display. The processor may split an input image into a first split image, a second split image, and a third split image in response to identifying a first user input selecting split scaling, split an entire area of the display into a first display area, a second display area, and a third display area, scale the input image using a first scaler according to a ratio of the first split image to the first display area and obtain the first scaled image, scale the input image using a second scaler according to a ratio of the second split image to the second display area and obtain the second scaled image, scale the input image using a third scaler according to a ratio of the third split image to the third display area and obtain the third scaled image, merge the first scaled image, the second scaled image, and the third scaled image and generate an output image, and display the output image through the display.

In an embodiment, the second split image may include a central portion of the image, the first split image and the third split image may include images disposed at two opposite ends of the second split image, the first split image and the third split image may have a same size, and the second area may include a central area of the display.

In an embodiment, the processor may identify a category of the input image, identify a splitting scheme of the input image corresponding to the identified category, and split the input image into the first split image, the second split image, and the third split image based on the splitting scheme.

In an embodiment, the processor may identify a second user input selecting a splitting scheme of the input image, and split the input image into the first split image, the second split image, and the third split image based on the splitting scheme corresponding to the second user input.

In an embodiment, the first split image, the second split image, and the third split image may have a same height, and the first display area, the second display area, and the third display area may have a same height.

In an embodiment, the first split image, the second split image, and the third split image may have a same width, and the first display area, the second display area, and the third display area may have a same width.

In an embodiment, the first scaled image may correspond to the second split image, the second scaled image may correspond to the first split image, and the third scaled image may correspond to the third split image.

In an embodiment, the processor may identify a category of the input image, identify a splitting scheme of the entire display area corresponding to the identified category, and split the entire display area into the first display area, the second display area, and the third display area based on the splitting scheme of the entire display area.

In an embodiment, the processor may identify a third user input selecting a splitting scheme of the entire display area, and split the entire display area into the first display area, the second display area, and the third display area based on the splitting scheme corresponding to the third user input.

In an embodiment, the electronic device may further include a communication unit electrically connected to the processor, and the processor may receive information regarding the first ratio and the second ratio from a server device through the communication unit.

A method of operating an electronic device according to an embodiment of the disclosure may include splitting an input image into a first split image, a second split image, and a third split image in response to identifying a first user input selecting split scaling, splitting an entire area of the display into a first display area, a second display area, and a third display area, scaling the input image using a first scaler according to a ratio of the first split image to the first display area and obtaining the first scaled image, scaling the input image using a second scaler according to a ratio of the second split image to the second display area and obtaining the second scaled image, scaling the input image using a third scaler according to a ratio of the third split image to the third display area and obtaining the third scaled image, merging the first scaled image, the second scaled image, and the third scaled image and generating an output image, and displaying the output image through the display.

In an embodiment, the second split image may include a central portion of the image, the first split image and the third split image may include images disposed at two opposite ends of the second split image, the first split image and the third split image may have a same size, and the second area may include a central area of the display.

In an embodiment, the method of operating an electronic device may include identifying a category of the input image, identifying a splitting scheme of the input image corresponding to the identified category, and splitting the input image into the first split image, the second split image, and the third split image based on the splitting scheme.

In an embodiment, a second user input selecting a splitting scheme of the input image may be identified, and the input image may be split into the first split image, the second split image, and the third split image based on the splitting scheme corresponding to the second user input.

In an embodiment, the first split image, the second split image, and the third split image may have a same height, and the first display area, the second display area, and the third display area may have a same height.

In an embodiment, the first split image, the second split image, and the third split image may have a same width, and the first display area, the second display area, and the third display area may have a same width.

In an embodiment, the first scaled image may correspond to the second split image, the second scaled image may correspond to the first split image, and the third scaled image may correspond to the third split image.

In an embodiment, the method of operating an electronic device may include identifying a category of the input image, identifying a splitting scheme of the entire display area corresponding to the identified category, and splitting the entire display area into the first display area, the second display area, and the third display area based on the splitting scheme of the entire display area.

In an embodiment, the method of operating an electronic device may include identifying a third user input selecting a splitting scheme of the entire display area, and splitting the entire display area into the first display area, the second display area, and the third display area based on the splitting scheme corresponding to the third user input.

In an embodiment, the method of operating an electronic device may include receiving information regarding the first ratio and the second ratio from a server device.

### [Advantageous Effects]

Embodiments of the disclosure provide an effect of providing a user with an immersive video.

The effects obtainable from the disclosure are not limited to the effects mentioned in various embodiments, and other effects not mentioned are clearly understood by those of ordinary skill in the art to which the disclosure belongs from the description below.

### [Brief Description of Drawings]

FIG. 1 illustrates a block configuration of an electronic device according to embodiments.
FIG. 2 illustrates an example of a screen displayed on an electronic device according to an embodiment.
FIG. 3 illustrates an operation flow of an electronic device according to an embodiment.
FIG. 4 illustrates a block configuration and an example of scaling of an electronic device according to an embodiment.
FIG. 5 illustrates an example of a split image and a display area according to an embodiment.
FIG. 6 illustrates an example of an output image according to an embodiment.
FIG. 7 illustrates an operation flow of an electronic device according to an embodiment.
FIG. 8 illustrates an example of a split image and a display area according to an embodiment.

In connection to the description of the drawings, the same or similar reference numerals may be used for the same or similar components.

### [Mode for the Invention]

Hereinafter, embodiments of the disclosure are described in detail with reference to the drawings so that those skilled in the art to which the disclosure pertains may easily practice the disclosure. However, the disclosure may be implemented in other various forms and is not limited to the embodiments set forth herein. The same or similar reference denotations may be used to refer to the same or similar elements throughout the specification and the drawings. Further, for clarity and brevity, no description is made of well-known functions and configurations in the drawings and relevant descriptions.

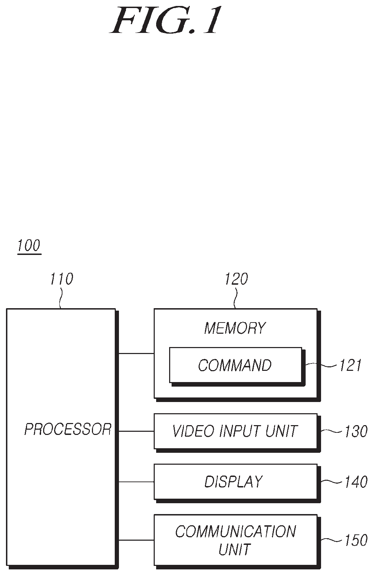

FIG. 1 illustrates a block configuration of an electronic device according to an embodiment. An electronic device 100 may perform various computing functions (e.g., watching video) and may include a device capable of performing wireless communication with surrounding electronic devices or server devices (e.g., Internet of things (IoT) server). For example, the electronic device may include a display device (e.g., TV or monitor), a smart home appliance, or a user device (e.g., smartphone or wearable device). The electronic device 100 may be various types of electronic devices without being limited to the above examples.

According to an embodiment, the memory 120 is a storage medium used by the electronic device 100 and may store data, such as at least one command 121 or configuration information corresponding to at least one program. The program may include an operating system (OS) program and various application programs.

In an embodiment, the memory 120 may include at least one type of storage medium of flash memory types, hard disk types, multimedia card micro types, card types of memories (e.g., SD or XD memory cards), random access memories (RAMs), static random access memories (SRAMs), read-only memories (ROMs), electrically erasable programmable read-only memories (EEPROMs), programmable read-only memories (PROMs), magnetic memories, magnetic disks, or optical discs.

According to an embodiment, the video input unit 130 may receive images and image information through a tuner (not shown), an input/output unit (not shown), or the communication unit 150. The video input unit 130 may include at least one of the tuner and the input/output unit. The tuner may tune and select only the frequency of the broadcast channel to be received by the electronic device 100 from among many radio wave components through amplification, mixing, resonance, or the like for the broadcast signal wiredly/wirelessly received. The broadcast signal may include video, audio, and additional data (e.g., an electronic program guide (EPG)). The tuner may receive real-time broadcast channels (or real-time viewing images) from various broadcast sources, such as terrestrial broadcasts, cable broadcasts, satellite broadcasts, Internet broadcasts, and the like. The tuner may be implemented integrally with the electronic device 100 or may be implemented as a separate tuner electrically connected to the electronic device 100. The input/output unit may include at least one of a high definition multimedia interface (HDMI) input port, a component input jack, a PC input port, and a USB input jack capable of receiving an image and image information from an external device of the electronic device 100 under the control of the processor 110. It is obvious to one of ordinary skill in the art that the input/output unit may be added, deleted, and/or changed according to the performance and structure of the electronic device 100.

According to an embodiment, the display 140 may perform functions for outputting information in the form of a number, a character, an image, and/or a graphic. The display 140 may include at least one hardware module for output. The at least one hardware module may include at least one of, e.g., a liquid crystal display (LCD), a light emitting diode (LED), a light emitting polymer display (LPD), an organic light emitting diode (OLED), an active matrix organic light emitting diode (AMOLED), or flexible LED (FLED). The display 140 may display a screen corresponding to data received from the processor 110. The display 140 may be referred to as an 'output unit', a 'display unit', or by other terms having an equivalent technical meaning. "Screen" may include an image displayed on the display of the electronic device. "Image" may be referred to as a frame. Various types of objects, such as icons, text, photos, videos, widgets, etc. may be displayed on the screen.

According to an embodiment, the communication unit 150 may provide a wired/wireless communication interface that enables communication with an external device. The communication unit 150 may include at least one of a wired Ethernet, a wireless LAN communication unit, and a short-range communication unit. The wireless LAN communication unit may include, e.g., Wi-Fi, and may support the wireless LAN standard (IEEE802.11x) of the institute of electrical and electronics engineers (IEEE). The wireless LAN communication unit may be wirelessly connected to an access point (AP) under the control of the processor 110. An AP may include a device for connecting devices by related standards using Wi-Fi in a computer network. The short-range communication unit may wirelessly perform short-range communication with an external device under the control of the processor 110. Short-range communication may include Bluetooth, Bluetooth low energy, infrared data association (IrDA), ultra-wideband (UWB), and near-field communication (NFC). The external device may include a server device and a mobile terminal (e.g., phone, tablet, etc.) providing, e.g., a video service.

According to an embodiment, the processor 110 may control at least one other component of the electronic device 100 and/or execute computation or data processing regarding communication by executing at least one command 121 stored in the memory 120. The processor 110 may include at least one of a central processing unit (CPU), a graphic processing unit (GPU), a micro controller unit (MCU), a sensor hub, a supplementary processor, a communication processor, an application processor, an application specific integrated circuit (ASIC), or field programmable gate arrays (FPGA) and may have multiple cores.

In an embodiment, the processor 110 may execute, e.g., software to control at least one other component (e.g., a hardware or software component) of the electronic device 100 connected with the processor 110 and may process or compute various data. According to an embodiment, as at least part of the data processing or computation, the processor 110 may store a command or data received from another component onto a volatile memory, process the command or the data stored in the volatile memory, and store resulting data in a non-volatile memory. According to an embodiment, the processor 110 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor. For example, in case that the electronic device 100 includes the main processor and the auxiliary processor, the auxiliary processor may be configured to use lower power than the main processor or to be specified for a designated function. The auxiliary processor may be implemented separately from, or as part of, the main processor.

In an embodiment, the processor may obtain image frame data from at least one of the memory 120, the video input unit 130, or the communication unit 150. The processor may receive image frame data from at least one of the memory 120, the video input unit 130, or the communication unit 150. The image frame data may include data regarding a frame constituting an image. For example, the image frame data may be identified from the memory 120 (e.g., an image recorded and stored). For example, the image frame data may include data obtained from the communication unit 150 or the video input unit 130 (e.g., real-time streaming image).

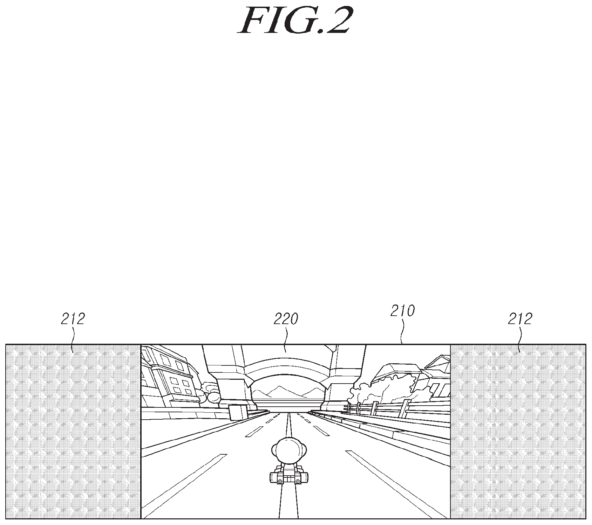

FIG. 2 illustrates an example of a screen displayed on an electronic device according to an embodiment.

Referring to FIG. 2, a display area 200 may include an entire display area of an electronic device.

In an embodiment, the entire display area 200 may have a predetermined ratio. In the following description, a ratio may indicate a ratio of a horizontal length to a vertical length. For example, the entire display area 200 may have a ratio of 21:9 or 32:9.

In an embodiment, an image 220 may include an image obtained from a video input unit (e.g., the video input unit 130) and displayed on the electronic device.

In an embodiment, the image 220 may have a predetermined ratio. For example, the image may have a ratio of 16:9.

In an embodiment, a black area 212 may include an area where the image 220 is not displayed in the entire display area 200. The black area 212 may be black-processed and displayed as a black screen without displaying an image.

As illustrated in FIG. 2, with the development of technology, a black area 212 may occur in the entire display area 210 due to a difference between a ratio of an input image input to the electronic device and a ratio of the entire display area. The black area 212 may be black-processed as is, or scaling may be performed using a graphics processing unit so that the input image 220 is displayed in the entire display area 210. However, in this case, since the original input image is extended, distortion may occur in the screen, which may hinder immersion of a user. Embodiments of the disclosure relate to a method of operating an electronic device for providing an immersive video.

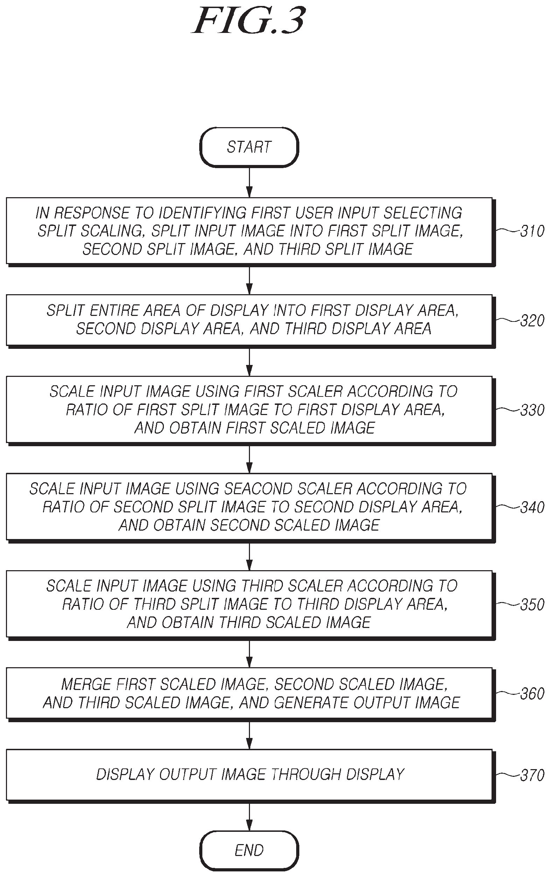

FIG. 3 illustrates an operation flow of an electronic device according to an embodiment. The electronic device of FIG. 3 may include a device corresponding to the electronic device of FIG. 1. In other words, the electronic device of FIG. 3 may include a display device (e.g., a smart TV, a smart monitor).

According to an embodiment, in operation 310, the electronic device may split an input image into a first split image, a second split image, and a third split image in response to identifying a first user input selecting split scaling.

In an embodiment, the first user input selecting split scaling may be identified through a user interface displayed on the electronic device. For example, the first user input selecting split scaling may include a user input selecting any one of a plurality of display modes displayed in case that a menu for setting a display mode of the electronic device is selected.

In an embodiment, the input image may include an image or a video input through a video input unit (e.g., the video input unit 130) of the electronic device.

In an embodiment, the electronic device may split the input image into a plurality of split images. In the following description, splitting the input image into three split images by the electronic device is described as an example, but this is merely an example, and the electronic device may split and display the input image into a plurality of split images less than or more than three.

In an embodiment, the number of split images may be determined based on the number of scalers included in the video input unit of the electronic device. For example, in case that the electronic device includes n scalers, the number of split images may have a number equal to or less than n.

In an embodiment, the first split image, the second split image, and the third split image may have a same height. For example, in case that a horizontal length of the input image is longer than a vertical length, the electronic device may split the input image into split images having a same height.

In an embodiment, the first split image, the second split image, and the third split image may have a same width. For example, in case that a vertical length of the input image is longer than a horizontal length, the electronic device may split the input image into split images having a same width.

In an embodiment, the electronic device may split the input image into the first split image, the second split image, and the third split image based on a predetermined ratio (a first ratio). The first ratio may be determined based on a type of the input image, a ratio of horizontal and vertical lengths, and/or a user input (hereinafter, a second user input) for inputting the first ratio. For example, in case that the ratio of horizontal and vertical lengths of the input image is 16:9, the electronic device may split the input image at a ratio of 3:10:3. For example, in case that the ratio of horizontal and vertical lengths of the input image is 21:9 and the input image is an image displayed on a game screen, the electronic device may split the input image at a ratio of 4:13:4. For example, in case that a user input for splitting the input image having a ratio of horizontal and vertical lengths of 16:9 at a ratio of 2:12:2 is identified, the electronic device may split the input image at a ratio of 2:12:2.

According to an embodiment, in operation 320, the electronic device may split the entire area of the display into a first display area, a second display area, and a third display area.

In an embodiment, the entire area of the display may include an entire area displayed through the display of the electronic device.

In an embodiment, the electronic device may split the entire display area into a plurality of display areas. The number of the plurality of display areas to be split may have a same number as the number of split images. For example, in case that the electronic device splits the input image into the first split image, the second split image, and the third split image in operation 310, the electronic device may split the entire display area into the first display area, the second display area, and the third display area.

In an embodiment, the first display area, the second display area, and the third split display area may have a same height. For example, in case that a horizontal length of the entire display area is longer than a vertical length, the electronic device may split the entire display area into display areas having a same height.

In an embodiment, the first display area, the second display area, and the third split display area may have a same width. For example, in case that a vertical length of the entire display area is longer than a horizontal length, the electronic device may split the entire display area into display areas having a same width.

In an embodiment, the electronic device may split the entire display area into the first display area, the second display area, and the third display area based on a predetermined ratio (a second ratio).

In an embodiment, the second ratio may be determined based on a type of the entire display area, a ratio of horizontal and vertical lengths, and/or a user input (hereinafter, a third user input) for inputting the second ratio. For example, in case that the ratio of horizontal and vertical lengths of the entire display area is 32:9, the electronic device may split the entire display area at a ratio of 8:16:8. For example, in case that the ratio of horizontal and vertical lengths of the entire display area is 32:9 and an image is displayed on a game screen, the electronic device may split the entire display area at a ratio of 7:18:7. For example, in case that a user input for splitting the entire display area having a ratio of horizontal and vertical lengths of 32:9 at a ratio of 8:16:8 is identified, the electronic device may split the input image at a ratio of 8:16:8.

In an embodiment, the second ratio may be predetermined based on the first ratio. For example, in case that the first ratio is 3:10:3, the second ratio may be determined to be 8:16:8. The first ratio and the second ratio in the following description are merely examples, and the split image and the display area may be determined at ratios having different values.

In an embodiment, the first split image and the third split image may have a same size.

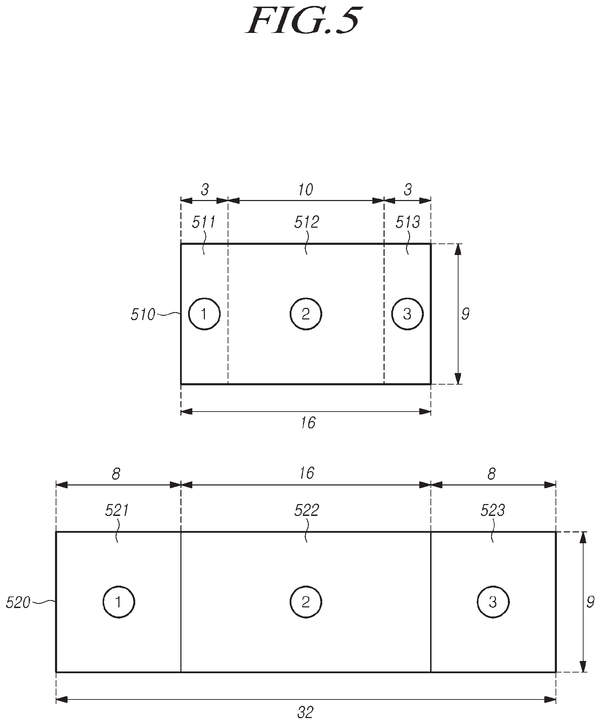

FIG. 5 illustrates an example of a split image and a display area according to an embodiment.

Referring to FIG. 5, the electronic device may split an input image 510 into a first split image 511, a second split image 512, and a third split image 513. The second split image 512 may include an image including a central portion of the input image. The first split image 513 may include an image located at one end (e.g., a left side) of the second split image 512. The third split image 513 may include an image located at another end (e.g., a right side) of the second split image 512.

In an embodiment, the electronic device may split an entire display area 520 into a first display area 521, a second display area 522, and a third display area 523. The second display area 522 may include an image including a central area of the input image. The first display area 521 may include a display area located at one end (e.g., a left side) of the second display area 522. The third display area 523 may include a display area located at another end (e.g., a right side) of the second display area 522.

In an embodiment, the electronic device may split the input image 510 into three split images based on the first ratio (3:10:3).

In an embodiment, the electronic device may split the entire display area 520 into three display areas based on the second ratio (8:16:8).

In an embodiment, the electronic device may receive information regarding the first ratio and the second ratio from a server device through the communication unit.

According to an embodiment, in operation 330, the electronic device may scale the input image using a first scaler according to a ratio of the first split image to the first display area, and obtain a first scaled image.

In an embodiment, the first scaler may include any one of a plurality of scalers included in the electronic device. A scaler may be a component included in the electronic device for adjusting a size of an image or emphasizing detailed information. The scaler may enlarge a split image to be displayed in a display area according to a predetermined ratio.

In an embodiment, the ratio of the split image to the display area may be determined according to the split image and the display area according to the first ratio and the second ratio determined in operation 310 and operation 320.

In an embodiment, the ratio of the first split image to the first display area may include a ratio of horizontal or vertical lengths of the first display area and the first split image. For example, referring to FIG. 5, the ratio of the first split image to the first display area may have a value of 3/8.

According to an embodiment, in operation 340, the electronic device may scale the input image using a second scaler according to a ratio of the second split image to the second display area, and obtain a second scaled image.

In an embodiment, the second scaler may include any one of a plurality of scalers included in the electronic device.

In an embodiment, the ratio of the second split image to the second display area may include a ratio of horizontal or vertical lengths of the second display area and the second split image. For example, referring to FIG. 5, the ratio of the second split image to the second display area may have a value of 10/16.

According to an embodiment, in operation 350, the electronic device may scale the input image using a third scaler according to a ratio of the third split image to the third display area, and obtain a third scaled image.

In an embodiment, the ratio of the third split image to the third display area may include a ratio of horizontal or vertical lengths of the third display area and the third split image. For example, referring to FIG. 5, the ratio of the third split image to the third display area may have a value of 3/8.

According to an embodiment, in operation 360, the electronic device may merge the first scaled image, the second scaled image, and the third scaled image, and generate an output image. For example, the scaled images may be merged through a composer and an FRC included in the electronic device. The output image may include an image or a video to be displayed on a screen.

According to an embodiment, in operation 370, the electronic device may display the output image through the display.

In an embodiment, the first scaled image may be displayed in the first display area, the second scaled image may be displayed in the second display area, and the third scaled image may be displayed in the third display area.

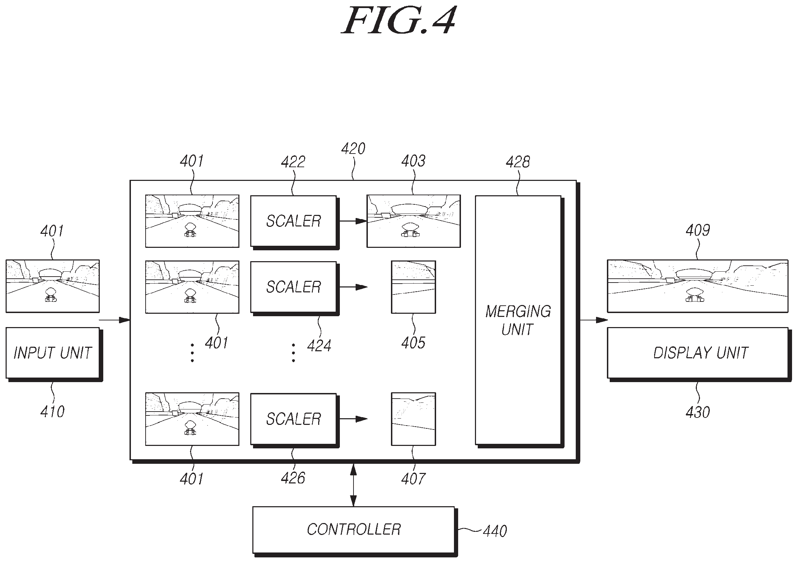

FIG. 4 illustrates a block configuration and an example of scaling of an electronic device according to an embodiment. An input unit 410 may correspond to the video input unit 130 of FIG. 1. A video processing unit 420 of FIG. 4 may include a portion of the processor 110 of FIG. 1. A controller 440 may include a portion of the processor 110 of FIG. 1. A display unit 430 may include the display 140 of FIG. 1.

Referring to FIG. 4, an input image 401 may be input through the input unit 410. The input image 401 input through the input unit 410 may be transmitted to the video processing unit 420.

In an embodiment, the video processing unit 420 may include a plurality of scalers 422, 424, 426. In the following description, three scalers included in the video processing unit 420 is described as an example, but this is merely an example, and more or fewer than three scalers may be included in the video processing unit 420.

In an embodiment, the electronic device may scale the input image 401 through a plurality of scalers of the video processing unit 420, and generate a scaled image. For example, a first scaler 422 may scale the input image 401 and generate a first scaled image 403. The first scaled image 403 may be an image to be displayed in the second display area, and may include an image corresponding to the second split image. For example, a second scaler 424 may scale the input image 401 and generate a second scaled image 405. The second scaled image 405 may be an image to be displayed in the first display area, and may include an image corresponding to the first split image. For example, a third scaler 426 may scale the input image 401 and generate a third scaled image 407. The third scaled image 407 may be an image to be displayed in the third display area, and may include an image corresponding to the third split image.

In an embodiment, the electronic device may merge the scaled images, i.e., the first scaled image 403, the second scaled image 405, and the third scaled image 407, through a merging unit 428, and generate an output image 409.

In an embodiment, the electronic device may display the output image 409 on the display unit 430.

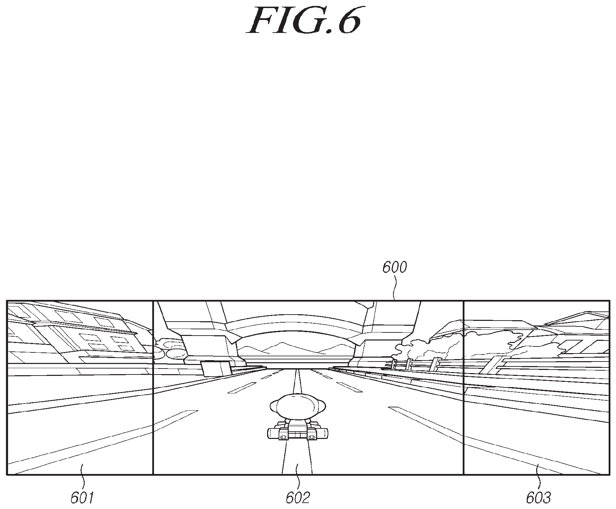

FIG. 6 illustrates an example of an output image according to an embodiment.

Referring to FIG. 6, a first output image 601, a second output image 602, and a third output image 603 may be displayed on a display 600. The first output image 601 may include an image corresponding to the second scaled image 405. The second output image 602 may include an image corresponding to the first scaled image 403. The third output image 603 may include an image corresponding to the third scaled image 407.

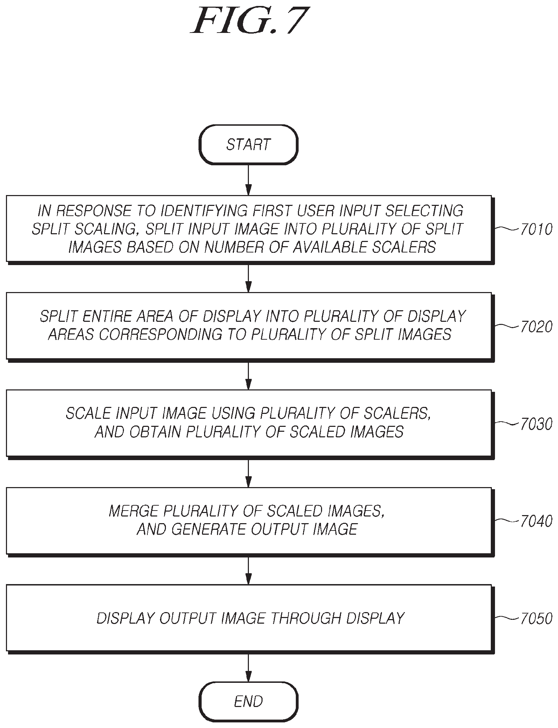

FIG. 7 illustrates an operation flow of an electronic device according to an embodiment. The electronic device of FIG. 7 may include a device corresponding to the electronic device of FIG. 1. In other words, the electronic device of FIG. 7 may include a display device (e.g., a smart TV, a smart monitor). The embodiment of FIG. 7 may be an example of the embodiment of FIG. 3. No repetitive description thereof is presented.

According to an embodiment, in operation 7010, the electronic device may split an input image into a plurality of split images based on the number of available scalers in response to identifying a first user input selecting split scaling. The description of the first user input and the input image may refer to the description of the first user input and the input image described above in operation 310 of FIG. 3.

In an embodiment, the electronic device may identify the number of available scalers in response to identifying the first user input selecting split scaling, and determine the number of split images based on the number of scalers.

For example, in case that the number of available scalers is three, the electronic device may split the input image into three split images (e.g., the first split image 511, the second split image 512, and the third split image 513 of FIG. 5).

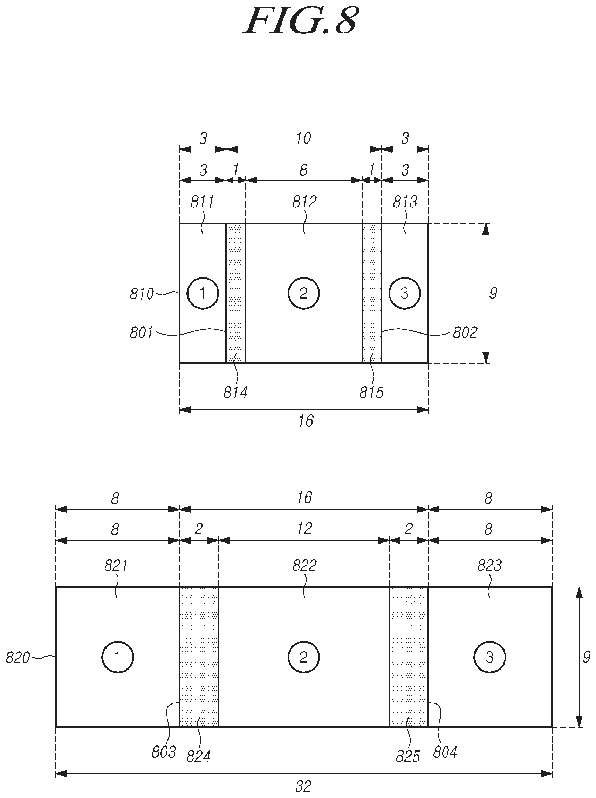

For example, in case that the number of available scalers is five, the electronic device may split the input image into five split images (e.g., a first split image 811, a second split image 812, a third split image 813, a fourth split image 814, and a fifth split image 815 of FIG. 8).

For example, in case that the number of available scalers is seven, the electronic device may split the input image into seven split images.

Hereinafter, for convenience of description, an embodiment is described using a case where the number of available scalers is five as an example. However, this is merely an example, and the embodiment is not limited thereto. For example, the embodiment may be applied even in case that the number of available scalers exceeds five or is less than five.

In an embodiment, the electronic device may determine a ratio (or range, size, etc.) of the corresponding split image to be processed by each scaler, a ratio (or range, size, etc.) of a display area corresponding to the split image, and/or a ratio (a scaling ratio) of the split image to the display area based on the number of available scalers.

In an embodiment, the electronic device may determine a ratio (a third ratio) of the corresponding split image to be processed by each scaler based on the number of available scalers, and split the input image into a plurality of split images based on the third ratio. The third ratio may be determined based on the number of scalers, a type of the input image, a ratio of horizontal and vertical lengths, and/or a user input for inputting the first ratio (or the third ratio).

For example, in case that the ratio of horizontal and vertical lengths of the input image is 16:9 and the number of scalers is five, the electronic device may determine a ratio (a third ratio) of 3:1:8:1:3, and split the input image at the third ratio.

For example, in case that a user input for splitting the input image having a ratio of horizontal and vertical lengths of 16:9 at a ratio (a first ratio) of 3:10:3 is identified and the number of scalers is five, the electronic device may determine a ratio (a third ratio) of 3:1:8:1:3, and split the input image at the third ratio. As such, even in case that the user inputs an input for splitting the input image into three split images at the first ratio (3:10:3), in case that the number of available scalers is five, the electronic device may split the input image into five split images at the third ratio (3:1:8:1:3).

For example, in case that a user input for splitting the input image having a ratio of horizontal and vertical lengths of 16:9 at a ratio (a third ratio) of 3:1:8:1:3 is identified, the electronic device may determine a ratio (a third ratio) of 3:1:8:1:3, and split the input image at the third ratio.

According to an embodiment, in operation 7020, the electronic device may split the entire area of the display into a plurality of display areas corresponding to a plurality of split screens.

In an embodiment, the entire area of the display may include an entire area displayed through the display of the electronic device.

In an embodiment, the electronic device may split the entire display area into a plurality of display areas. The number of display areas may have a same number as the number of split images.

For example, in case that the electronic device splits the input image into the first split image, the second split image, and the third split image in operation 7010, the electronic device may split the entire display area into a first display area corresponding to the first split image, a second display area corresponding to the second split image, and a third display area corresponding to the third split image.

For example, in case that the electronic device splits the input image into the first split image, the second split image, the third split image, a fourth split image, and a fifth split image in operation 7010, the electronic device may split the entire display area into a first display area corresponding to the first split image, a second display area corresponding to the second split image, a third display area corresponding to the third split image, a fourth display area corresponding to the fourth split image, and a fifth display area corresponding to the fifth split image.

For example, in case that the electronic device splits the input image into first to seventh split images in operation 7010, the electronic device may split the entire display area into first to seventh display areas respectively corresponding to the first to seventh split images.

In an embodiment, the electronic device may split the entire display area into a plurality of display areas based on a ratio (a fourth ratio) of a display area corresponding to a split image. The fourth ratio may be determined based on a type of the entire display area, the number of scalers, a ratio of horizontal and vertical lengths, and/or a user input for inputting the second ratio (or the fourth ratio).

For example, in case that the ratio of horizontal and vertical lengths of the entire display area is 32:9 and the number of scalers is five, the electronic device may split the entire display area at a ratio (a fourth ratio) of 8:2:14:2:8.

For example, in case that a user input for splitting the entire display area having a ratio of horizontal and vertical lengths of 32:9 at a ratio (a second ratio) of 8:16:8 is identified and the number of scalers is five, the electronic device may split the input image at a ratio (a fourth ratio) of 8:2:14:2:8.

For example, in case that a user input for splitting the entire display area having a ratio of horizontal and vertical lengths of 32:9 at a ratio (a fourth ratio) of 8:2:14:2:8 is identified, the electronic device may split the entire display area at a ratio (a fourth ratio) of 8:2:14:2:8.

In an embodiment, the fourth ratio may be predetermined based on the third ratio. For example, in case that the third ratio is 3:1:8:1:3, the fourth ratio may be determined to be 8:2:14:2:8. The third ratio and the fourth ratio in the following description are merely examples, and the split image and the display area may be determined at ratios having different values.

FIG. 8 illustrates an example of a split image and a display area according to an embodiment.

Referring to FIG. 8, the electronic device may split an input image 810 into a first split image 811, a second split image 812, a third split image 813, a fourth split image 814, and a fifth split image 815.

In an embodiment, the second split image 812 may include an image including a central portion of the input image.

In an embodiment, the first split image 813 and the fourth split image 814 may include images located in a first direction (e.g., a left direction) with respect to the second split image 812. For example, the fourth split image 814 may include an image located in the first direction (e.g., the left direction) with respect to the second split image 812 and located between the second split image 812 and the first split image 811. As an example, the fourth split image 814 may include an image located on a left side of the second split image 812, and the first split image 811 may include an image located on a left side of the fourth split image 814.

In an embodiment, the third split image 813 and the fifth split image 815 may include images located in a second direction (e.g., a right direction) opposite to the first direction (e.g., the left direction) with respect to the second split image 812. For example, the fifth split image 815 may include an image located in the second direction (e.g., the right direction) with respect to the second split image 812 and located between the second split image 812 and the third split image 813. As an example, the fifth split image 814 may include an image located on a right side of the second split image 812, and the third split image 813 may include an image located on a right side of the fifth split image 815.

In an embodiment, the fourth split image 814 may be located adjacent to a first boundary 801 within the input image 810, and the fifth split image 815 may be located adjacent to a second boundary 802 within the input image 810. The first boundary 801 and the second boundary 802 may be identified based on, e.g., the first ratio (3:10:8) different from the third ratio (3:1:8:1:3). The first ratio (3:10:8) may be identified based on, e.g., a user input for splitting the input image 810 having a ratio of horizontal and vertical lengths of 16:9 at the first ratio (3:10:8). As an example, the fourth split image 814 and the fifth split image 815 may be included within an area corresponding to a split image (e.g., the second split image 512 of FIG. 5) including a central portion of the first ratio (3:10:8), but the disclosure is not limited thereto. For example, the fourth split image 814 may be included within an area corresponding to a split image (e.g., the first split image 511 of FIG. 5) including a left portion of the first ratio (3:10:3), and the fifth split image 815 may be included within an area corresponding to a split image (e.g., the third split image 513 of FIG. 5) including a right portion of the first ratio (3:10:3).

In an embodiment, the electronic device may split an entire display area 820 into a first display area 821, a second display area 822, a third display area 823, a fourth display area 824, and a fifth display area 825.

In an embodiment, the second display area 822 may include an image including a central area of the entire display area.

In an embodiment, the first display area 821 and the fourth display area 824 may include display areas located in a first direction (e.g., a left direction) with respect to the second display area 822. For example, the fourth display area 824 may include a display area located in the first direction (e.g., the left direction) with respect to the second display area 822 and located between the second display area 822 and the first display area 821. As an example, the fourth display area 824 may include a display area located on a left side of the second display area 822, and the first display area 821 may include a display area located on a left side of the fourth display area 824.

In an embodiment, the third display area 823 and the fifth display area 825 may include display areas located in a second direction (e.g., a right direction) opposite to the first direction (e.g., the left direction) with respect to the second display area 822. For example, the fifth display area 825 may include a display area located in the second direction (e.g., the right direction) with respect to the second display area 822 and located between the third display area 823 and the first display area 821. As an example, the fifth display area 825 may include a display area located on a right side of the second display area 822, and the third display area 823 may include a display area located on a right side of the fifth display area 825.

In an embodiment, the fourth display area 824 may be located adjacent to a third boundary 803 within the entire display area 820, and the fifth display area 825 may be located adjacent to a fourth boundary 804 within the entire display area 820. The third boundary 803 and the fourth boundary 804 may be identified based on, e.g., the second ratio (8:16:8) different from the fourth ratio (8:2:14:2:8). The second ratio (8:16:8) may be identified based on, e.g., a user input for splitting the entire display area 820 having a ratio of horizontal and vertical lengths of 32:9 at the second ratio (8:16:8). As an example, the fourth display area 824 and the fifth display area 825 may be included within an area corresponding to a display area (e.g., the second display area 522 of FIG. 5) including a central portion of the second ratio (8:16:8), but the disclosure is not limited thereto. For example, the fourth display area 824 may be included within an area corresponding to a display area (e.g., the first display area 521 of FIG. 5) including a left portion of the second ratio (8:16:8), and the fifth display area 825 may be included within an area corresponding to a display area (e.g., the third display area 523 of FIG. 5) including a right portion of the second ratio (8:16:8).

In an embodiment, the electronic device may split the input image 810 into five split images based on the third ratio (3:1:8:1:3).

In an embodiment, the electronic device may split the entire display area 520 into five display areas based on the fourth ratio (8:2:14:2:8).

In an embodiment, the electronic device may receive information regarding the third ratio and the fourth ratio from a server device through the communication unit.

According to an embodiment, in operation 7030, the electronic device may scale the input image using a plurality of scalers and obtain a plurality of scaled images.

In an embodiment, the electronic device may determine a ratio (a scaling ratio) of a split image to a display area based on the number of available scalers.

For example, in case that the number of scalers is five, the electronic device may scale the input image using a first scaler according to a ratio (a first scaling ratio) of the first split image 811 to the first display area 821 and obtain a first scaled image, scale the input image using a second scaler according to a ratio (a second scaling ratio) of the second split image 812 to the second display area 822 and obtain a second scaled image, scale the input image using a third scaler according to a ratio (a third scaling ratio) of the third split image 813 to the third display area 823 and obtain a third scaled image, scale the input image using a fourth scaler according to a ratio (a fourth scaling ratio) of the fourth split image 814 to the fourth display area 824 and obtain a fourth scaled image, and scale the input image using a fifth scaler according to a ratio (a fifth scaling ratio) of the fifth split image 815 to the fifth display area 825 and obtain a fifth scaled image.

In an embodiment, the ratio (scaling ratio) of the split image to the display area may be determined according to the split image and the display area according to the third ratio and the fourth ratio determined in operation 7010 and operation 7020. As an example, referring to FIG. 8, the ratio (the first scaling ratio) of the first split image to the first display area may have a value of 3/8, the ratio (the second scaling ratio) of the second split image to the second display area may have a value of 8/14, the ratio (the third scaling ratio) of the third split image to the third display area may have a value of 3/8, the ratio (the fourth scaling ratio) of the fourth split image to the fourth display area may have a value of 1/2, and the ratio (the fifth scaling ratio) of the fifth split image to the fifth display area may have a value of 1/2.

As such, compared to the embodiment of FIG. 5, in the embodiment of FIG. 8, the fourth split image 814 is added between the first split image 811 and the second split image 812, the fifth split image 815 is added between the second split image 812 and the third split image 813, and the scaling ratio (1/2) for the fourth split image 814 and the fifth split image 815 is set to an intermediate ratio between the scaling ratio (8/14) for the second split image 812 and the scaling ratio (3/8) for the first split image 811 and the third split image 813, thereby alleviating a difference in the scaling ratios (e.g., enlargement ratios) of portions adjacent to the boundaries. Accordingly, in the embodiment of FIG. 8, compared to the embodiment of FIG. 5, a more natural image at the boundary portion may be provided to a user. As such, the five-split method (e.g., the embodiment of FIG. 8) may alleviate the difference in enlargement ratios near the boundaries compared to the three-split method (e.g., the embodiment of FIG. 5) and provide a natural image near the boundaries to a user. Meanwhile, in case that the number of available scalers exceeds five, additional split images may be further added between the first split image and the second split image and between the second split image and the third split image, and the scaling ratio for the added split images may be set to an intermediate ratio between the scaling ratios for the first split image and the second split image and an intermediate ratio between the scaling ratios for the second split image and the third split image, thereby providing a more natural image near the boundaries to a user.

According to an embodiment, in operation 7040, the electronic device may merge a plurality of scaled images and generate an output image. For example, the electronic device may merge the first scaled image, the second scaled image, the third scaled image, the fourth scaled image, and the fifth scaled image, and generate an output image.

According to an embodiment, in operation 7050, the electronic device may display the output image through the display. For example, the first scaled image may be displayed in the first display area 821, the second scaled image may be displayed in the second display area 822, the third scaled image may be displayed in the third display area 823, the fourth scaled image may be displayed in the fourth display area 824, and the fifth scaled image may be displayed in the fifth display area 825.

An electronic device according to an embodiment of the disclosure includes a display and a processor electrically connected to the display. The processor may split an input image into a first split image, a second split image, and a third split image in response to identifying a first user input selecting split scaling, split an entire area of the display into a first display area, a second display area, and a third display area, scale the input image using a first scaler according to a ratio of the first split image to the first display area and obtain the first scaled image, scale the input image using a second scaler according to a ratio of the second split image to the second display area and obtain the second scaled image, scale the input image using a third scaler according to a ratio of the third split image to the third display area and obtain the third scaled image, merge the first scaled image, the second scaled image, and the third scaled image and generate an output image, and display the output image through the display.

In an embodiment, the second split image may include a central portion of the image, the first split image and the third split image may include images disposed at two opposite ends of the second split image, the first split image and the third split image may have a same size, and the second area may include a central area of the display.

In an embodiment, the processor may identify a category of the input image, identify a splitting scheme of the input image corresponding to the identified category, and split the input image into the first split image, the second split image, and the third split image based on the splitting scheme.

In an embodiment, the processor may identify a second user input selecting a splitting scheme of the input image, and split the input image into the first split image, the second split image, and the third split image based on the splitting scheme corresponding to the second user input.

In an embodiment, the first split image, the second split image, and the third split image may have a same height, and the first display area, the second display area, and the third display area may have a same height.

In an embodiment, the first split image, the second split image, and the third split image may have a same width, and the first display area, the second display area, and the third display area may have a same width.

In an embodiment, the first scaled image may correspond to the second split image, the second scaled image may correspond to the first split image, and the third scaled image may correspond to the third split image.

In an embodiment, the processor may identify a category of the input image, identify a splitting scheme of the entire display area corresponding to the identified category, and split the entire display area into the first display area, the second display area, and the third display area based on the splitting scheme of the entire display area.

In an embodiment, the processor may identify a third user input selecting a splitting scheme of the entire display area, and split the entire display area into the first display area, the second display area, and the third display area based on the splitting scheme corresponding to the third user input.

In an embodiment, the electronic device may further include a communication unit electrically connected to the processor, and the processor may receive information regarding the first ratio and the second ratio from a server device through the communication unit.

A method of operating an electronic device according to an embodiment of the disclosure may include splitting an input image into a first split image, a second split image, and a third split image in response to identifying a first user input selecting split scaling, splitting an entire area of the display into a first display area, a second display area, and a third display area, scaling the input image using a first scaler according to a ratio of the first split image to the first display area and obtaining the first scaled image, scaling the input image using a second scaler according to a ratio of the second split image to the second display area and obtaining the second scaled image, scaling the input image using a third scaler according to a ratio of the third split image to the third display area and obtaining the third scaled image, merging the first scaled image, the second scaled image, and the third scaled image and generating an output image, and displaying the output image through the display.

In an embodiment, the second split image may include a central portion of the image, the first split image and the third split image may include images disposed at two opposite ends of the second split image, the first split image and the third split image may have a same size, and the second area may include a central area of the display.

In an embodiment, the method of operating an electronic device may include identifying a category of the input image, identifying a splitting scheme of the input image corresponding to the identified category, and splitting the input image into the first split image, the second split image, and the third split image based on the splitting scheme.

In an embodiment, a second user input selecting a splitting scheme of the input image may be identified, and the input image may be split into the first split image, the second split image, and the third split image based on the splitting scheme corresponding to the second user input.

In an embodiment, the first split image, the second split image, and the third split image may have a same height, and the first display area, the second display area, and the third display area may have a same height.

In an embodiment, the first split image, the second split image, and the third split image may have a same width, and the first display area, the second display area, and the third display area may have a same width.

In an embodiment, the first scaled image may correspond to the second split image, the second scaled image may correspond to the first split image, and the third scaled image may correspond to the third split image.

In an embodiment, the method of operating an electronic device may include identifying a category of the input image, identifying a splitting scheme of the entire display area corresponding to the identified category, and splitting the entire display area into the first display area, the second display area, and the third display area based on the splitting scheme of the entire display area.

In an embodiment, the method of operating an electronic device may include identifying a third user input selecting a splitting scheme of the entire display area, and splitting the entire display area into the first display area, the second display area, and the third display area based on the splitting scheme corresponding to the third user input.

In an embodiment, the method of operating an electronic device may include receiving information regarding the first ratio and the second ratio from a server device.

The electronic device according to various embodiments of the disclosure may be one of various types of electronic devices. The electronic devices may include, for example, a display device, a portable communication device (e.g., a smartphone), a computer device, a portable multimedia device, a portable medical device, a camera, a wearable device, or a home appliance. The electronic device according to an embodiment of the disclosure is not limited to the above-described devices.

It should be appreciated that various embodiments of the present disclosure and the terms used therein are not intended to limit the technological features set forth herein to particular embodiments and include various changes, equivalents, or replacements for a corresponding embodiment. As used herein, the singular forms "a," "an," and "the" are intended to include the plural forms as well, unless the context clearly indicates otherwise. As used herein, the term 'and/or' should be understood as encompassing any and all possible combinations by one or more of the enumerated items. As used herein, the terms "include," "have," and "comprise" are used merely to designate the presence of the feature, component, part, or a combination thereof described herein, but use of the term does not exclude the likelihood of presence or adding one or more other features, components, parts, or combinations thereof. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

As used herein, the term "part" or "module" may include a unit implemented in hardware, software, or firmware, and may interchangeably be used with other terms, for example, "logic," "logic block," "part," or "circuitry". A part or module may be a single integral component, or a minimum unit or part thereof, adapted to perform one or more functions. For example, according to an embodiment, 'part' or 'module' may be implemented in a form of an application-specific integrated circuit (ASIC).

As used in various embodiments of the disclosure, the term "if" may be interpreted as "when," "upon," "in response to determining," or "in response to detecting," depending on the context. Similarly, "if A is determined" or "if A is detected" may be interpreted as "upon determining A" or "in response to determining A", or "upon detecting A" or "in response to detecting A", depending on the context.

The program executed by the server device 200 described herein may be implemented as a hardware component, a software component, and/or a combination thereof. The program may be executed by any system capable of executing computer readable instructions.

The software may include computer programs, codes, instructions, or combinations of one or more thereof and may configure the processing device as it is operated as desired or may instruct the processing device independently or collectively. The software may be implemented as a computer program including instructions stored in computer-readable storage media. The computer-readable storage media may include, e.g., magnetic storage media (e.g., read-only memory (ROM), random-access memory (RAM), floppy disk, hard disk, etc.) and an optically readable media (e.g., CD-ROM or digital versatile disc (DVD). Further, the computer-readable storage media may be distributed to computer systems connected via a network, and computer-readable codes may be stored and executed in a distributed manner. The computer program may be distributed (e.g., downloaded or uploaded) via an application store (e.g., Play Store^{™}), directly between two UEs (e.g., smartphones), or online. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display; and
a processor electrically connected to the display, wherein the processor is configured to:
in response to identifying a first user input selecting split scaling, split an input image into a first split image, a second split image, and a third split image;
split an entire area of the display into a first display area, a second display area, and a third display area;
scale the input image using a first scaler according to a ratio of the first split image to the first display area, and obtain a first scaled image;
scale the input image using a second scaler according to a ratio of the second split image to the second display area, and obtain a second scaled image;
scale the input image using a third scaler according to a ratio of the third split image to the third display area, and obtain a third scaled image;
merge the first scaled image, the second scaled image, and the third scaled image, and generate an output image; and
display the output image through the display.

2. The electronic device of claim 1,
wherein the second split image includes a central portion of the image,
wherein the first split image and the third split image include images disposed at two opposite ends of the second split image,
wherein the first split image and the third split image have a same size, and
wherein the second area includes a central area of the display.

3. The electronic device of claim 1 or 2, wherein the processor is configured to:
identify a category of the input image;
identify a splitting scheme of the input image corresponding to the identified category; and
split the input image into the first split image, the second split image, and the third split image based on the splitting scheme.

4. The electronic device of claim 1 or 2, wherein the processor is configured to:
identify a second user input selecting a splitting scheme of the input image, and split the input image into the first split image, the second split image, and the third split image based on the splitting scheme corresponding to the second user input.

5. The electronic device of claim 4,
wherein the first split image, the second split image, and the third split image have a same height, and
wherein the first display area, the second display area, and the third display area have a same height.

6. The electronic device of claim 4 or 5,
wherein the first split image, the second split image, and the third split image have a same width, and
wherein the first display area, the second display area, and the third display area have a same width.

7. The electronic device of any one of claims 1 to 6,
wherein the first scaled image corresponds to the second split image,
wherein the second scaled image corresponds to the first split image, and
wherein the third scaled image corresponds to the third split image.

8. The electronic device of any one of claims 1 to 7, wherein the processor is configured to:
identify a category of the input image;
identify a splitting scheme of the entire display area corresponding to the identified category; and
split the entire display area into the first display area, the second display area, and the third display area based on the splitting scheme of the entire display area.

9. The electronic device of any one of claims 1 to 7, wherein the processor is configured to:
identify a third user input selecting a splitting scheme of the entire display area; and
split the entire display area into the first display area, the second display area, and the third display area based on the splitting scheme corresponding to the third user input.

10. The electronic device of any one of claims 1 to 9, further comprising a communication unit electrically connected to the processor, wherein the processor is configured to:
receive information regarding the first ratio and the second ratio from a server device through the communication unit.

11. A method of operating an electronic device, the method comprising:
in response to identifying a first user input selecting split scaling, splitting an input image into a first split image, a second split image, and a third split image;
splitting an entire area of the display into a first display area, a second display area, and a third display area;
scaling the input image using a first scaler according to a ratio of the first split image to the first display area, and obtaining a first scaled image;
scaling the input image using a second scaler according to a ratio of the second split image to the second display area, and obtaining a second scaled image;
scaling the input image using a third scaler according to a ratio of the third split image to the third display area, and obtaining a third scaled image;
merging the first scaled image, the second scaled image, and the third scaled image, and generating an output image; and
displaying the output image through the display.

12. The method of claim 11,
wherein the second split image includes a central portion of the image,
wherein the first split image and the third split image include images disposed at two opposite ends of the second split image,
wherein the first split image and the third split image have a same size, and
wherein the second area includes a central area of the display.

13. The method of claim 11 or 12, comprising:
identifying a category of the input image;
identifying a splitting scheme of the input image corresponding to the identified category; and
splitting the input image into the first split image, the second split image, and the third split image based on the splitting scheme.

14. The method of claim 11 or 12, comprising:
identifying a second user input selecting a splitting scheme of the input image, and splitting the input image into the first split image, the second split image, and the third split image based on the splitting scheme corresponding to the second user input.

15. The method of claim 14,
wherein the first split image, the second split image, and the third split image have a same height, and
wherein the first display area, the second display area, and the third display area have a same height.
